# EUROPEAN PATENT SPECIFICATION

(11) **EP 0 981 886 B1**
(45) Date of publication and mention of the grant of the patent: **02.11.2006**
(21) Application number: 98921963.9
(22) Date of filing: 04.05.1998
(51) Int. Cl.: H04M 1/57, H04M 19/04

(54) **IDENTIFICATION THROUGH NETWORK MESSAGES**
IDENTIFIZIERUNG DURCH NACHRICHTEN ÜBER NETZWERKE
IDENTIFICATION PAR DES MESSAGES RESEAU

(30) Priority: 02.05.1997 SE 9701669
(43) Date of publication of application: 01.03.2000
(73) Proprietor: Björhn, Anders, 118 44 Lidingö (SE); Melanton, Johan, 116 41 Stockholm (SE)
(72) Inventor: Björhn, Anders, 118 44 Lidingö (SE); Melanton, Johan, 116 41 Stockholm (SE)
(74) Representative: Onn, Thorsten
(86) International application number: PCT/SE1998/000812
(87) International publication number: WO 1998/051056

(56) References cited:
- EP-A- 0 567 135
- EP-A- 0 590 862
- EP-A- 0 783 219
- WO-A-96/27974
- GB-A- 2 082 419
- GB-A- 2 280 084
- GB-A- 2 305 329
- US-A- 5 481 594
- US-A- 5 481 599

## Description

### Technical field

The present invention refers to a method and an arrangement for identifying individuals via external messages from a telephone that includes or is connected to caller identification.

### The prior art

Mobile telephones often have similar standardised ringing tones, a consequence of which is that owners of mobile telephones all search for their telephone when, for example, one telephone rings in a crowd of people. The owners cannot differentiate if it is their telephone that is ringing or someone else's.

In addition, the mobile telephone owner cannot see who is calling, which can, among other things, be desirable when this person is busy and does not want to receive calls that can easily wait until a later occasion.

Furthermore, within a family in the home with common telephone, for example, or at a place of work with one subscriber number, it is impossible to decide for whom the call is intended when the telephone rings, who it is who is calling, etc., and, accordingly, who should answer.

In addition, if one subscriber calls another subscriber, it is desirable if the individual called knows who is calling. This is necessary in two situations. In the first case, when the two who intend to converse know each other, and, in the second case, when the individual who calls wants their identity to be known, even though the two who will be conversing do not know each other, or when the individual called does not know who is calling.

Moreover, the individual called may, on some occasions, feel that certain subscribers should not be able to reach them.

There is also a need for a subscriber who makes a call to be able to leave or receive information from the individual called when this person cannot be reached by an ordinary telephone call.

The international patent application WO-A-9627974 discloses e telephone set comprising ring generator means for producing a ringing sound in accordance with signaling information received by the terminal and relating to the identity of a calling party. A ringing sound may be produced directly from the signaling information or data stored in memory means.

Patent application GB-A-2305329 relates to a telephone apparatus programmed to provide different audible indications based on a calling line identification signal, which is compared with a list stored in memory. If a match is found, an audible indication associated with the identified number is played. Information associated to the signal may also be displayed in written form.

US patent document US-A-5481594 shows a telephone adapted to recognize the number of a calling party, to find a message stored in the telephone and associated to the number, and to play aloud the message stored for that calling party. The numbers are programmed by a user, also remotely.

The patent application GB-A-2280084 teaches a telephone comprising a telephone number memory and a response message memory. Upon receiving a call, the telephone number of a caller is checked and, if the number is stored in the telephone number memory, a corresponding response message is transmitted to the caller.

EP-A-567135 patent application describes a telephone adapted to identify a calling party's number, and to output a corresponding answer message. A correspondence table between record areas and ID numbers is stored in memory. Another EP-A-783219 patent application also discloses a similar apparatus able to identify the caller line identity and to read a corresponding message from memory.

The present invention intends to solve the problems named above according to that described in the wording of the enclosed claims.

### Summary of the invention

The present invention intends to solve the problems named above by means of an externally received personal network message linked to a subscriber number.

With a personal network message, there is a link to a unique reference that attracts the attention of the subscriber called via the personal network message.

Subscribers who call are assigned different messages that can include different sounds so that it will be possible to see who wants to speak with the individual who has been called. For example, there can be one special message for all of a sales representative's VIP customers, or each one of them could have their own individual message.

The circle of friends of each member of a family can be assigned a unique message so that, for example, the daughter in the family answers when one of her friends calls, or that the mother answers when one of her acquaintances calls, etc.

A subscriber's own messages can be distributed to their friends and acquaintances from their own telephone.

When it is desirable that a subscriber who does not know the caller or who does not have their personal message needs to know who is calling, the message can include name and/or number information read out with a chosen voice.

A telephone can be pre-programmed to switch off the ringing tone for specially selected subscribers who call.

To achieve that stated above, the present invention refers to a method for individual identification via external networked messages from a telephone that includes caller identification, whereby a subscriber is given a personal telephone identity via their subscriber number and an external personal message. Other subscriber numbers with associated personal messages can be linked to a memory position in the register of telephone numbers. When it recognises a number, the telephone generates the personal network message in the telephone register that is linked to the subscriber number in the register.

The telephone includes a library from which the stored position in the register can be updated with new personal network messages. The library is composed of a mobile card or chip that is fitted to telephones. Messages saved in the library can be transferred to the register or to other memory devices via the telephone's set of keys.

In one embodiment, the storage of individual signals in positions in the register can take place via the telephone's set of keys.

The said other subscribers can store or play-back their own personal network messages linked to their subscriber number in another subscriber's register by making a call to the subscriber concerned, whereby the storage or play-back takes place via use of, for example, the telephone's set of keys.

In one embodiment, the functions of the key set and a code are linked together with the subscriber number to the receiving telephone where the storage takes place, whereby the telephone has a device that identifies the code so that the individual message can be stored or played-back. The function keys and the code are linked together with the subscriber number as a prefix, a suffix or as a function key and code together with the subscriber number plus the final addition of a further function key.

An alternative embodiment includes or refers the individual net message to a home page in the telephone, which establishes a call connection with the telephone that is calling, whereby the ringing tone is shunted and the home page is transmitted to a display unit in the telephone that is calling. The subscriber has programmed the home page and stored it in the register, whereby the subscriber has linked the position in the register to a specific code, whereby the code linked together with the calling subscriber's subscriber number allows access to the home page.

Alternatively, a telecommunications operator can provide the home pages, whereby the code linked together with the calling subscriber's subscriber number allows access to the home page.

The function keys and the code are linked together with the subscriber number as a prefix, a suffix or as a function key and code together with the subscriber number plus the final addition of a further function key.

In addition, the present invention includes an arrangement for identifying individuals via a net message from a telephone that includes a device for caller identification, whereby the subscriber has a personal telephone identity via their subscriber number and a personal network message. The network message or address that allows return to the network message is stored in a register, whereby other subscribers' subscriber numbers and associated personal messages can be linked to a memory position in the register via a programming device.

When the telephone recognises a number, it generates, via a device for this purpose, the personal network message in the telephone register that is linked to the register position for that subscriber number with a device for delivering or receiving a network message.

The arrangement even includes variations in the above procedure that are encompassed by the enclosed non-independent claims for the arrangement.

### Brief description of the drawings

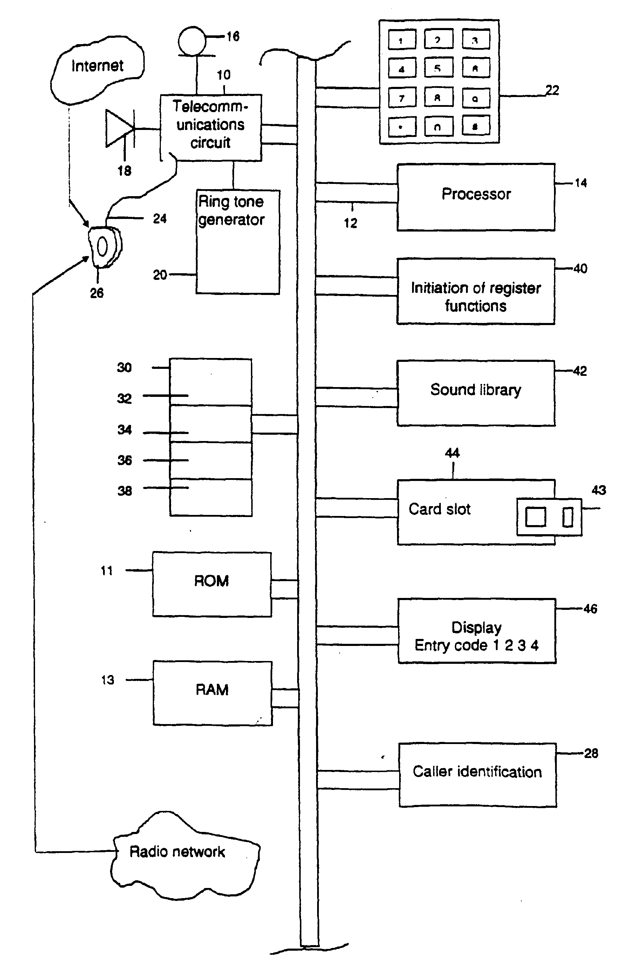

For a better understanding of the embodiments of the present invention in the continued description, reference is made to the enclosed drawing that illustrates schematically how the register or other electronic memory with stored messages or addresses to the messages is connected to the subscriber numbers to achieve the individual identification according to the present invention.

### Detailed description of preferred embodiments

The present invention concerns identifying individuals via network messages or addresses that allow return access to messages stored in a register in a telephone, whereby the positions in the register are linked to a subscriber number, for example, to the subscriber number of the individual who is calling (the A-subscriber). Caller identification services (Caller ID Services) connected to or included in the telephone identify the A-subscriber and the personal network message that is linked to the A-subscriber in the register of the individual called (the B-subscriber) is delivered via a display in the telephone, a connection to Internet, a radio network, from the ringing tone device or via a speaker included in the telephone. By this means, the B-subscriber receives information externally about who is calling by obtaining this individual's personal network message and the correct person can answer if more that one persons have access to the telephone of the B-subscriber.

In the present invention, a network message is external, i.e. it emanates from a source other than the B-subscriber's telephone, but it can be stored in the B-subscriber's telephone, possibly indirectly addressed, and can, in principle, include any type of information whatsoever, such as speech, sound, text messages, graphics, as well as a combination of these.

The telephone or telephone unit can be of any selected type, such as a PSTN-telephone (Public Switched Telephone Network), in other words, the general telephone network, a mobile telephone or other mobile station (MS), a pager, a computer with a modem, a "Smart-Phone^{®}", etc. In this respect, telephone or telephone unit refers to such an arrangement or another arrangement that includes telephone functions.

According to the present invention, individual identification even includes the network message that is stored in a position in the register being delivered in the form of a home page, which, when one subscriber has called another subscriber via this individual's subscriber number and a PIN (Personal Identity Number) code, is given access to the home page of the subscriber who was called. The home page can include address information, door entry codes, business card information, telephone numbers to the B-subscriber as well as any other information whatsoever. The signal that generates the home page activates devices that shunt the telephone's ringing tone and brings about a call connection to the A-subscriber without the B-subscriber needing to activate the telephone by, for example, lifting the handpiece. The B-subscriber does not even need to be aware that the telephone has connected a call via the subscriber number with the PIN-code, where the PIN-code can be a suffix, a prefix or be connected to the subscriber number, whereby calling takes place via the use of the telephone's key set with its numbers and function keys such as "*" and "#".

A description with reference to the enclosed schematic figure in the form of a block diagram for a telephone unit with individual identification is given below.

In the continuation of this description, reference is made to known techniques regarding telecommunications functions in the present invention. These are not described in greater detail as it is the individual identification via network messages that is the object of the invention.

The schematic telephone unit according to the enclosed figure includes, in one embodiment, a digital telephone that comprises the block diagram and where the A/D-switching and vice versa is included in the block that looks after the telecommunications 10 in the telephone. All blocks in the figure are connected to a common communications bus 12 with control conductors, address conductors and data conductors. The bus is controlled by telecommunications processor with programs that control the functions for individual identification that is part of the block for telecommunications 10. Alternatively, the programs can be included in electronic memory devices such as different forms of ROM 11, RAM 13, NOVRAM, etc.

One alternative also includes an additional processor 14 being connected to the bus 12 for controlling individual identification via triggering from the telecommunications processor.

In addition, the block for telecommunication 10 is connected to a microphone 16 and a speaker 18 via bus 12 for use with conventional spoken communication as well as for recording and playing-back the personal messages for individual identification. A ring tone generator 20 is also connected to the bus. Furthermore, a key set 22 is connected to the bus 12, as well as conductors 24 from the jack 26 to the bus 12 for connecting to the telephone network. The said units 10-26 are those used for conventional telecommunication.

By means of the jack's 26 connection with the network, and possibly a modem, the telephone is connected with the outside world and such known networks for radio telecommunications, the public radio, and computer networks like Internet, etc.

According to the block diagram, the telephone unit also has a device for identifying caller numbers 28 connected to the bus, as well as a register 30 or a device for the electronic memory storage of signals for individual identification at different address positions 32, 34, 36, 38, whereby the address positions are directly connected to a subscriber number or to a subscriber number with a PIN-code.

A device 40 for initiating the signal functions that are included in the memory position in register 30 or for updating register functions from a library 42 connected to the bus that can include general sounds such as voice frequency impulses, tunes, animal noises, machine noises, written messages or combinations thereof is activated via the telecommunication block 10 and its processor or extra processor that may control the individual identification.

The library can also be included in what is known as a smart card 43, whereby the telephone is equipped with a card slot receiver 44 connected to bus 12. Card 43 can be updated with new network messages or be exchanged for another card.

Library 42 and/or smart card 43 can even be updated via radio, CD-ROM via a PC and modem, satellite, the mains electrical supply, etc. depending on which type of telephone is to be updated.

In addition, the telephone unit can be provided with a CD-ROM that can be used as a library 42.

In one embodiment of the present invention, a message including, for example, sound, reaches a telephone unit after being sent from an external telephone via the key set 22 and its function, letter and number keys, etc., with the desired sound in the register 30 from the sound library 42 and links one of the sounds to a subscriber number, whereby the associated subscriber is identified by the caller identification function, and the sound stored in the register for the subscriber number is delivered by the telephone via the ring tone generator 20 or the speaker 18 when the subscriber calls. In this way, the person who has programmed in the individual signal for a certain subscriber number knows that the call is for him/her and no one else need answer.

As one of many examples, a sales representative can receive messages with specific signals that are stored in the register 30 and that, for example, identify specially important customers.

In one embodiment, the signals stored in register 30 can be stored in their entirety in the chosen register positions 32-38 or more, or the register can store an indirect address to a memory position, for example, in one of the memories 11, 13 or externally via Internet or a radio communications network of choice.

Register 30 is naturally not restricted to the four register positions as shown in the figure, but can be of any chosen accessible size or, as mentioned, can comprise an electronic memory with a large storage capacity.

A typical family consisting of a mother, father and teenage daughter is chosen as an example of the use of a telephone according to the figure.

A message with jazz music has been stored in register position 32 and linked to the subscriber number of the mother's female friend since they often meet up for jazz dance lessons. The mother thus knows with a good degree of certainty that it is her friend who is calling if the telephone's speaker plays jazz, and in this way, the mother has identified the individual who is her friend.

The daughter in the family has a boyfriend and they often go for rides on his motorcycle when they meet. For this reason, the sound of a motorcycle stored in register position 34 is heard from the speaker and the boyfriend is identified when his subscriber number via, for example caller identification 28 and the device 40 for initiating the register functions cause the ring tone generator 20 to be bypassed so that the sound of a motorcycle is emitted from the speaker 18 when the boyfriend makes a call.

The father, for example, works as a ice cream sales representative and his most important customer is an ice cream retailer with a fleet of vans. Thus, the ice cream retailer's easily recognisable melody is heard when one of their several subscriber numbers is connected to register position 36 and the father knows that he is being called by his most important customer.

In addition, the father can refer to his own home page on register position 38 in the telephone. Alternatively the telecommunications operator can provide the home page. The father's home page is quite simple and consists of the door entry code 1 2 3 4 to the residence where the family live. The father has given a PIN-code to a number of his friends that gives them access to the home page and the entry code. The PIN-code can also be connected to the friends' subscriber numbers as a prefix, a suffix or by some other suitable means.

In one embodiment of the present invention, the telecommunications operator offers a telephone exchange service for home pages whereby the friends have access to the service by using the key sets of their telephones to key in, for example, * xxxx # plus the father's subscriber number with a PIN-code as prefix or suffix. According to a known technique, this can take place automatically via the exchange when * xxxx # is received or when the caller is prompted by the exchange to gain access to the home page.

The home page is either stored in a register in the telecommunications operators exchange, network server or in the father's telephone, whereby device 40 ensures that the telephone is reconnected so that no calling signal is delivered and that the telephone connects the call to the friend with the PIN-code who is calling without the family being aware of this. In one embodiment, a lamp, light-emitting diode or other known indication device in the telephone indicates that a call is being connected. The home page with the entry code is then transferred to the caller's telephone and shown on a display 46 or, alternatively, is given as a voice message.

An A-subscriber can send a sound file to a B-subscriber that is what can be described as "permanently attached" or included in the B-subscriber's subscriber number, whereby the sound file is processed so that it is stored on the B-subscriber's hard disk or other memory module in the form of, for example, the Internet/HTML-based application known as "Cookie". The sound files can be sent over the telecommunications network, or another network such as radio, etc. When an A-subscriber once again calls the same B-subscriber, the permanently attached sound file is not sent because it has already been placed at the B-subscriber, and is associated with the A-subscriber's number, whereby the sound file or the Cookie is initiated when the B-subscriber's receiver (telephone or computer with a modem connected) identifies the A-subscriber's subscriber number via, for example, a unit for caller identification (Caller ID).

A cookie is a small piece of information that is sent by a web server to store in a web-browser for rapid return access for reading on a later occasion. This is used so that the web-browser is able to remember specific information.

Cookies are used, for example, when a web-browser stores passwords and user-identities. They are also used to store preferences for start pages. Microsoft^{®} and Net scape^{®} use Cookies to create personal start pages.

With regard to the problem of the individual being called (the B-subscriber) wanting to know who is calling (the A-subscriber) even if the two parties who are about to speak do not know each other, or that the individual called does not know who is calling, the telecommunications operator can, according to the present invention, provide a service so that the A-subscriber has the possibility, via * yyyy # plus the subscriber number, to record a voice message that is sent to the B-subscriber whose device 40 for initiating the register functions, instead of generating a ringing tone, connects the voice message via the telephone's speaker 18.

As an additional alternative, the service of storing one's own individual identity as a subscriber in another subscriber's telephone via, for example, * yyyxxx # plus the subscriber number and the personal network message with the calling tone, voice message, home page, Cookie, etc., is available.

Storage in register 30 is then achieved via the A-subscriber's initiation of register function 40, if the service has not been blocked by the B-subscriber.

In addition, the invention includes that the device 40 for initiating the register function for certain subscriber numbers that are stored in the telephone unit ensures that no ringing tone is generated, i.e. the telephone does not connect the call.

It should be emphasised that especially the device for initiating the register functions 40 and caller identification 28 can be achieved with software that is controlled by one of the processors in the telephone unit.

All programming of the telephone units or use of the exchange services can be initiated via menus in the telephone units via instructions and/or a voice in what is known as prompts.

Even if the present invention has been described in the form of preferred embodiments, it does not exclude other embodiments within the scope of the attached claims.

## Claims

1. A method for providing storage of an individual identity into a second subscriber's telephone unit from a first subscriber's telephone unit, by using a telecommunications operator service, and using a personal identity code plus a subscriber number of the first subscriber, said individual identity being a personal network message comprising at least one of a calling tone, voice message, home page and cookie, making a telephone call from the first subscriber's telephone unit to the second subscriber's telephone using said telecommunications operator service, entering the personal identity code by operating a key set of the first subscriber's telephone unit to effect the storage, using a device (28) in the second subscriber's telephone unit to identify the individual identity, **characterised by**:
storing said personal network message at a first address position (32,...,38) in a register (30) in said second subscriber's telephone unit, and linking the first address position of the register (30) to at least one of the subscriber number of the first subscriber and the subscriber number of the first subscriber with a personal identity code;
thus enabling the first subscriber to store said personal network message linked to the number of the first subscriber in a register (30) in said second subscriber's telephone unit and wherein, when a telephone call is placed again from said first subscriber's telephone to said second subscriber's telephone, said personal network message is initiated when the first subscriber is identified.

2. A method according to claim 1 **characterised in that** at least the first subscriber's telephone unit is one of a type utilized in the general telephone network, a mobile telephone or other mobile station, a pager or a computer with a modem.

3. A system for providing storage of an individual identity into a second subscriber's telephone unit from a first subscriber's telephone unit, by using a telecommunications operator service, and by using a personal identity code plus a subscriber number of the first subscriber, said individual identity being a personal network message comprising at least one of a calling tone, voice message, home page and cookie;
means for making a telephone call from the first subscriber's telephone unit to the second subscriber's telephone using said telecommunications operator service;
means for entering the personal identity code by operating a key set of the first subscriber's telephone unit to effect the storage;
means for using a device (28) in the second subscriber's telephone unit to identify the individual identity;
**characterized in that** the system further comprises means for storing said personal network message at a first address position (32,...,38) in a register (30) in said second subscriber's telephone unit, and for linking the first address position of the register (30) to at least one of the subscriber number of the first subscriber and the subscriber number of the first subscriber with a personal identity code; and
means for enabling the first subscriber to store said personal network message linked to the number of the first subscriber in a register (30) in said second subscriber's telephone unit, and means for initiating said personal network message when, upon a subsequent call from the first subscriber's telephone to the second subscriber's telephone, said first subscriber is identified.

4. A system according to claim 3 **characterised in that** at least the first subscriber's telephone unit is one of a type utilized in the general telephone network, a mobile telephone or other mobile station, a pager or a computer with a modem.

## Patentansprüche

1. Verfahren, welches das Abspeichern einer individuellen Identität im Telefongerät eines zweiten Teilnehmers vom Telefongerät eines ersten Teilnehmers aus gestattet, indem ein Dienst eines Netzbetreibers benutzt wird sowie ein persönlicher Identitätscode und eine Teilnehmernummer des ersten Teilnehmers, wobei die individuelle Identität eine persönliche Netzwerknachricht ist, die mindestens einen Rufton, eine Sprachnachricht, eine Homepage und/oder ein Cookie beinhaltet, indem über den Dienst des Netzbetreibers ein Telefonanruf vom Telefongerät des ersten Teilnehmers auf das Telefon des zweiten Teilnehmers getätigt wird, der persönliche Identitätscode durch Betätigen einer Tastatur des Telefongeräts des ersten Teilnehmers eingegeben wird um die Speicherung durchzuführen, eine Vorrichtung (28) im Telefongerät des zweiten Teilnehmers verwendet wird um die individuelle Identität zu erkennen, **gekennzeichnet durch**:
das Speichern der persönlichen Netzwerknachricht an einer ersten Adressposition (32, ..., 38) in einem Register (30) im Telefongerät des zweiten Teilnehmers, und das Verknüpfen der ersten Adressposition des Registers (30) mit mindestens der Teilnehmernummer des ersten Teilnehmers oder der Teilnehmernummer des ersten Teilnehmers mit einem persönlichen Identitätscode;
wodurch der erste Teilnehmer in die Lage versetzt wird, die mit der Nummer des ersten Teilnehmers verknüpfte persönliche Netzwerknachricht in einem Register (30) im Telefongerät des zweiten Teilnehmers zu speichern und wobei bei einem erneuten Telefonruf vom Telefon des genannten ersten Teilnehmers auf das Telefon des genannten zweiten Teilnehmers die genannte persönliche Netzwerknachricht ausgelöst wird wenn der erste Teilnehmer erkannt wird.

2. Verfahren nach Anspruch 1, **dadurch gekennzeichnet, dass** mindestens das Telefongerät des ersten Teilnehmers entweder eines der im allgemeinen Telefonnetz verwendeten Art, ein Mobiltelefon oder eine sonstige Mobilstation, ein Pager oder ein Computer mit einem Modem ist.

3. System, welches das Abspeichern einer individuellen Identität im Telefongerät eines zweiten Teilnehmers vom Telefongerät eines ersten Teilnehmers aus gestattet, indem ein Dienst eines Netzbetreibers benutzt wird sowie ein persönlicher Identitätscode und eine Teilnehmernummer des ersten Teilnehmers, wobei die individuelle Identität eine persönliche Netzwerknachricht ist, die mindestens einen Rufton, eine Sprachnachricht, eine Homepage und/oder ein Cookie beinhaltet;
Mittel zum Tätigen eines Telefonanrufs vom Telefongerät des ersten Teilnehmers auf das Telefon des zweiten Teilnehmers über den Dienst des Netzbetreibers;
Mittel zum Eingeben des persönlichen Identitätscodes durch Betätigen einer Tastatur des Telefongeräts des ersten Teilnehmers, um die Speicherung durchzuführen;
Mittel zur Verwendung einer Vorrichtung (28) im Telefongerät des zweiten Teilnehmers, um die individuelle Identität zu erkennen; **dadurch gekennzeichnet, dass** das System weiter Mittel aufweist zum Speichern der persönlichen Netzwerknachricht an einer ersten Adressposition (32, ..., 38) in einem Register (30) im Telefongerät des zweiten Teilnehmers und zum Verknüpfen der ersten Adressposition des Registers (30) mit mindestens der Teilnehmernummer des ersten Teilnehmers oder der Teilnehmernummer des ersten Teilnehmers mit einem persönlichen Identitätscode; und
Mittel, durch welche der erste Teilnehmer in die Lage versetzt wird, die mit der Nummer des ersten Teilnehmers verknüpfte persönliche Netzwerknachricht in einem Register (30) im Telefongerät des zweiten Teilnehmers zu speichern, und Mittel zum Auslösen der persönlichen Netzwerknachricht, wenn der erste Teilnehmer bei einem späteren Anruf vom Telefon des ersten Teilnehmers auf das Telefon des zweiten Teilnehmers erkannt wird. '

4. System nach Anspruch 3, **dadurch gekennzeichnet, dass** mindestens das Telefongerät des ersten Teilnehmers entweder eines der im allgemeinen Telefonnetz verwendeten Art, ein Mobiltelefon oder eine sonstige Mobilstation, ein Pager oder ein Computer mit einem Modem ist.

## Revendications

1. Procédé permettant la mémorisation d'une identité individuelle dans l'unité téléphonique d'un deuxième abonné depuis l'unité téléphonique d'un premier abonné, en utilisant un service d'un opérateur de télécommunications, et en utilisant un code d'identité personnel ainsi qu'un numéro d'abonné du premier abonné, ladite identité individuelle étant un message réseau personnel comprenant au moins une tonalité de sonnerie, un message vocal, une page d'accueil et/ou un témoin, faisant un appel téléphonique depuis l'unité téléphonique du premier abonné vers le téléphone du deuxième abonné en utilisant ledit service de l'opérateur de télécommunications, saisissant le code d'identité personnel en actionnant un clavier de l'unité téléphonique du premier abonné afin d'effectuer la mémorisation, utilisant un dispositif (28) dans l'unité téléphonique du deuxième abonné pour identifier l'identité individuelle, **caractérisé par**:
le fait de mémoriser ledit message réseau personnel en une première position d'adresse (32, ..., 38) d'un registre (30) dans ladite unité téléphonique du deuxième abonné, et de lier la première position d'adresse du registre (30) à au moins un parmi le numéro d'abonné du premier abonné et le numéro d'abonné du premier abonné avec un code d'identité personnel;
permettant ainsi au premier abonné de mémoriser ledit message réseau personnel lié au numéro du premier abonné dans un registre (30) dans ladite unité téléphonique du deuxième abonné, et où, lors d'un nouvel appel téléphonique depuis ledit téléphone du premier abonné vers ledit téléphone du deuxième abonné, ledit message réseau personnel est initié quand le premier abonné est identifié.

2. Procédé selon la revendication 1, **caractérisé en ce qu'**au moins l'unité téléphonique du premier abonné est une parmi un type utilisé dans le réseau téléphonique général, un téléphone mobile ou une autre station mobile, un téléavertisseur ou un ordinateur équipé d'un modem.

3. Système permettant la mémorisation d'une identité individuelle dans l'unité téléphonique d'un deuxième abonné depuis l'unité téléphonique d'un premier abonné, en utilisant un service d'un opérateur de télécommunications, et en utilisant un code d'identité personnel ainsi qu'un numéro d'abonné du premier abonné, ladite identité individuelle étant un message réseau personnel comprenant au moins une tonalité de sonnerie, un message vocal, une page d'accueil et/ou un témoin;
des moyens pour faire un appel téléphonique depuis l'unité téléphonique du premier abonné vers le téléphone du deuxième abonné en utilisant ledit service de l'opérateur de télécommunications;
des moyens pour saisir le code d'identité personnel en actionnant un clavier de l'unité téléphonique du premier abonné afin d'effectuer la mémorisation;
des moyens pour utiliser un dispositif (28) dans l'unité téléphonique du deuxième abonné pour identifier l'identité individuelle; **caractérisé en ce que** le système comprend en outre des moyens pour mémoriser ledit message réseau personnel en une première position d'adresse (32, ..., 38) d'un registre (30) dans ladite unité téléphonique du deuxième abonné et pour lier la première position d'adresse du registre (30) à au moins un parmi le numéro d'abonné du.premier abonné et le numéro d'abonné du premier abonné avec un code d'identité personnel;
des moyens permettant au premier abonné de mémoriser ledit message réseau personnel lié au numéro du premier abonné dans un registre (30) dans ladite unité téléphonique du deuxième abonné et des moyens pour initier ledit message réseau personnel quand ledit premier abonné est identifié lors d'un appel ultérieur depuis le téléphone du premier abonné vers le téléphone du deuxième abonné.

4. Système selon la revendication 3, **caractérisé en ce qu'**au moins l'unité téléphonique du premier abonné est une parmi un type utilisé dans le réseau téléphonique général, un téléphone mobile ou une autre station mobile, un téléavertisseur ou un ordinateur équipé d'un modem.
